# EUROPEAN PATENT SPECIFICATION

(11) **EP 0 860 790 B1**
(45) Date of publication and mention of the grant of the patent: **01.02.2006**
(21) Application number: 98102207.2
(22) Date of filing: 09.02.1998
(51) Int. Cl.: G06K 17/00, G06K 15/00, G06F 3/12

(54) **Printing apparatus**
Druckvorrichtung
Appareil d'impression

(30) Priority: 19.02.1997 JP 3498897
(43) Date of publication of application: 26.08.1998
(73) Proprietor: Hitachi, Ltd., Tokyo 100-8280 (JP)
(72) Inventor: Omori, Hideyuki, Hitachinaka-shi, Ibaraki 312-0062 (JP); Sano, Kiyoshi, Hitachi-shi, Ibaraki 316-0011 (JP); Kato, Takeshi, Hitachi-shi, Ibaraki 316-0014 (JP); Kobayashi, Shinichi, Hitachinaka-shi, Ibaraki 311-1222 (JP)
(74) Representative: Beetz & Partner

(56) References cited:
- EP-A- 0 575 168
- US-A- 4 426 166
- US-A- 4 975 858

## Description

### Background of the Invention:

The present invention relates to a printing apparatus wherein a printing unit for carrying out printing by operating a printing head and an input unit for processing the printing information which is wanted to print using the printing head are constituted individually, each of the printing unit and the input unit has a control means respectively, and further using a communication means the information is transmitted between the printing unit and the input unit and then the printing is carried out.

A printer is used generally as an output terminal means of an information processing apparatus. There are various kinds of the printers, however in general the printer comprises an input unit which sets the printing content by processing the printing information and a printing unit which practices directly the printing using a printing head.

In general, in this kind of the printer, the input unit and the printing unit are constituted integrally and the printing head which is included in the printing unit is positioned to opposite against a printing object matter to be printed and then the printing is carried out.

As to this kind of the printer, for example in an ink jet system printer, the printer has known such a printer is disclosed for example in Japanese patent laid-open publication No. Hei 7-205,524.

In this printer, by extending a signal line and an ink tube etc. the printing head is constituted to position at a side of a remote position separated from a main body of the printing unit and using the printing head which is positioned at a side of a remote position separated from a handy operation unit (an input unit).

Another kind of a printer has known, for example such a printer is disclosed in Japanese patent laid-open Nos. Hei 4-15,811 and Hei 5-254,112 etc..

In these printers, a side of a printing unit and a side of an input unit are constituted independently, the printing is carried out at a side of a remote position separated from a printing head through some communication means or other.

However, in these conventional printers, the input unit is an information processing terminal means and in the printer (a main body of a printing apparatus) at a side of the printing the input unit and the printing unit are constituted integrally.

Now, in a case when the printing apparatus in which the input unit and the printing unit are constituted integrally as stated in the above conventional printer is assembled to other apparatus and they are used as a system apparatus, it is necessary to install the input unit at a where the combined apparatus is easily used operable at any cost, there is no denying a restriction with respect to an installation position of the input unit.

Further, it causes a restriction in a dimension about the printing apparatus. Taking a consideration into the above stated circumstances, it is necessary to determine an installation place where the combined apparatus is installed. In particular, this causes a problem in a printing apparatus in which the printing is carried out on a manufacture product which is moved on a transportation line using an ink jet.

Here, as shown in the above stated printer disclosed in Japanese patent laid-open publication No. Hei-205,524, it is desirable to provide the printer in which only the printing head is installed at a remote position separated from the side of the main body of the printing apparatus.

However, in this case, as stated in above since there is a restriction about a drawing-around working for a signal line and an ink supply tube, as a result it is impossible to set voluntary the printing position and the operation position.

US 4 975 858 discloses a controller for a printer for printing data received from an external data processor. Data from an external data processor such as a host computer are once stored into an external file buffer in order to improve through-put of the external data processor, and thereafter, the stored data are outputted from the file buffer to the printer system. The printer system includes a bit map type data processor, a print engine including a laser and an electro-photographic printer, and accessary apparatuses.

EP 0 575 168 discloses a host printer bidirectional interface. Through said interface, a host computer communicates with a printer.

It is the object of the invention to provide a printing apparatus well-suited for printing matter on a transportation line.

This object is accomplished in accordance with the features of claim 1. Dependent claims are directed to preferred embodiments.

### Brief Description of Drawings:

Fig. 1 is a block diagram showing a schematic construction of an ink jet system printing apparatus which relates to one embodiment of a printing apparatus according to the present invention; and
Fig. 2 is an explanatory view showing a system construction in which the ink jet system printing apparatus according to the present invention is transported by a transportation belt.

### Description of the Invention:

Hereinafter, one embodiment of a printing apparatus according to the present invention will be explained referring to the drawings.

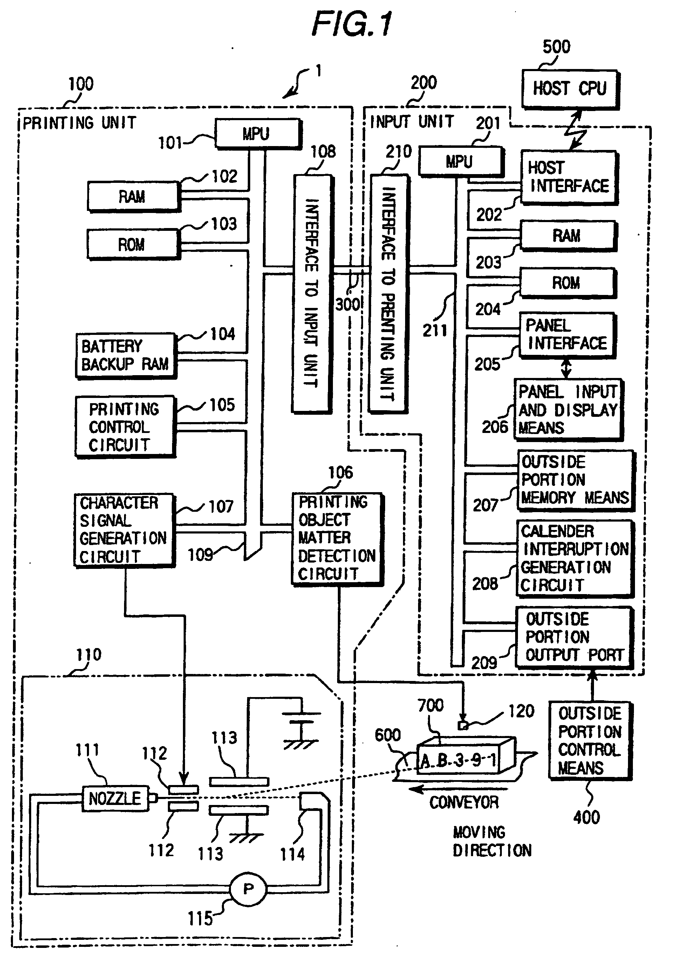

First of all, a whole construction of a printing apparatus is shown in Fig. 1. In Fig. 1, a printing apparatus 1 of the carrying-out embodiment according to the present invention shows a continuous system ink jet printing apparatus. The printing apparatus 1 is constituted by a printing unit 100 and an input unit 200.

In Fig. 1, the printing unit 100 is indicated at a portion enclosed by a one dot line and also the input unit 200 is indicated at a portion enclosed by anther one dot line. Hereinafter, each of the printing unit 100 and the input unit 200 will be explained in detail.

The printing unit 100 is constituted by MPU (a micro-processing unit) 101, RAM (a random access memory) 102, ROM (a read only memory) 103, a battery backup memory 104, a printing control circuit 105, a printing object matter to be printed detection circuit 106, a character signal generation circuit 107, an interface 108 with the input unit 200, a bus line 109 for connecting the above stated various means and for carrying out a transfer of signals or the giving and the receiving of the signals, and a printing head 110.

MPU 101 works a role of the control of the whole printing unit 100 and is performed to function as a communication control means. RAM 102 stores temporally the data in the printing unit 100. ROM 103 stores a control use software and a static data and the buttery backup RAM 104 stores the printing information etc..

The printing control circuit 105 carries out a general control with respect to the printing of the printing unit 100 and the printing object matter to be printed detection circuit 106 detects the printing object matter to be printed which has reached to a printing position in accordance with a detection signal from a sensor 120 for detecting the printing object matter to be printed which detects the reach of the printing matter to be printed.

The character signal generation circuit 107 converts the printing date (the printing content) which is transmitted from the input unit 200 into a character signal and transmits the character signal to a side of the printing head 110. Further, the bus line 109 is used to transfer the data which exist between the respective units 101-110 in the printing unit 100, thereby it is possible to carry out a two-way communication between the printing unit 100 and the input unit 200 through the interface 108.

The printing head 110 comprises a nozzle 111 for injecting the ink, a charging electrode 112 for supplying the electric charge to the ink droplet which is injected from the nozzle 111 and is atomized, a deflection electrode 113 for deflecting the charged ink droplet, a gutter 114 for recovering the ink which was not used to carry out the printing, and a pump 115 for supplying again the ink which is recovered from the gutter 114 to the nozzle 111.

The character signal from the character signal generation circuit 109 is applied to the charging electrode 112 and the deflection electrode 113 and sets a flying track of the ink droplet.

The input unit 200 comprises MPU 201, a host interface 202, RAM 203, ROM 204, a panel interface 205, a panel input and display apparatus 206, an outside portion memory apparatus 207, a calender interruption generation circuit 208, an outside portion input and output port 209, an interface 210 with the printing unit 100, and a bus line 211 for connecting these apparatuses and for carrying out a transfer or the giving and the receiving of the signals.

MPU 201 carries out a control of the whole input unit 200 and is performed to function as a communication control means. RAM 203 stores temporally the data in the input unit 200. ROM 204 stores a control use software and the data and the outside portion memory apparatus 207 stores the printing information etc.. The panel input and display apparatus 206 displays the inputted data and the printing contents etc. and the inputted data is received and delivered in MPU 201 through the panel interface 205.

The calender interruption generation circuit 208 becomes a trigger source when using the calender the printing content is edited and further the outside portion input and output port 209 is transmitted or given the data from an outside portion control apparatus 400 when the printing content is altered from the outside portion control apparatus 400.

The host interface 202 is an interface where the transfer to a host CPU 500 is carried out and through these various surrounding devices and MPU 200 the data is transferred or is received and given, further through the interface 210 the data communication to the printing unit 100 is carried out.

Further, in this figure only a communication line 35 is shown, however as to this communication various kinds of the communication means can be employed and according to the kind of the employed communication means a number of the communication line 35 can be set suitably.

In this figure, a printing object matter 700 to be printed is mounted on and transported by a conveyor 600 and by the printing head 110 which opposites to the printing object matter 700 to be printed the printing is carried out to the moving printing object matter 700 to be printed.

In a case during the printing, before the enter to the printing motion from the panel input and display apparatus 207 of the input unit 200 the content to be printed and the format, for example a number of stage to be printed, a posture of the character to be printed, a printing matrix, a character height, a position of a write operation etc., have stored.

Among above these data, the data for necessary to store even a power source is presented an off condition is stored in parallel to the outside portion memory apparatus 207.

The data to be inputted thus is transmitted from the input unit 200 to the printing unit 100 through the communication line 35. The transmitted data is stored the battery backup RAM 104 and RAM 102 of the printing unit 100 through the interface 108.

Each of the battery backup RAM and RAM 104 put to its proper use and then the data which in one during the off condition of the power source it must not be volatilized is stored in the battery backup RAM 104. Further, the non-volatilized data can be stored in the outside portion memory apparatus 207 of the input unit 200 and then in the printing apparatus 1 it can be constituted by omitting the battery backup RAM 104.

Further, as to the input manner about these data, from the host CPU 500 the data can be transmitted to the side of the printing unit 100 through the host interface 202 or from the outside portion control apparatus 400 the data is transmitted through the outside input and output port 209. In either case, the kinds of these data are stored in parallel to a memory area of RAM 203 and the outside portion memory apparatus 207 similarly to a case where these data are inputted from the panel input and display apparatus 206.

As stated in above, at a condition where the information before the enter of the printing motion is stored in a predetermined device, when the printing object matter to be printed detection sensor 120 detects the printing object matter 700 to be printed, a printing matter to be printed detection signal is transmitted to MPU 101 through the printing object matter to be printed detection circuit 106.

When MPU 101 receives the printing object matter to be printed detection signal, MPU 101 generates a command of printing start and also transmits the content of the printing information which has stored in the battery backup RAM 104 to the character signal generation circuit 107 through the bus line 109. The printing content which is transmitted from the character signal generation circuit 107 is converted into the character signal and the character signal is transmitted to the charging electrode 112.

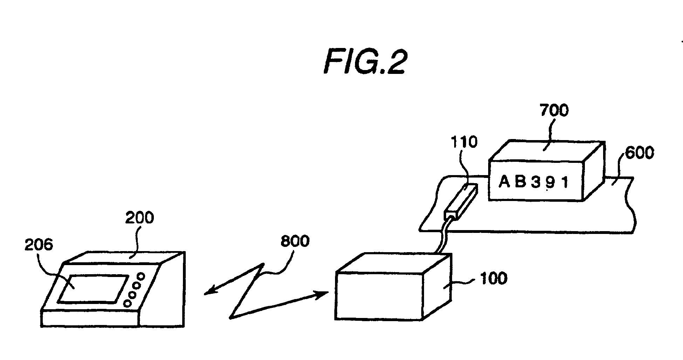

The ink is injected from the nozzle 111 and is charged by atomizing it in the charging electrode 112. The charged ink is deflected by the deflection electrode 113. And as shown in Fig. 2, the ink droplet is flied to the printing object matter 700 to be printed which is transferred by the conveyor 600 and is adhered to the printing object matter 700 to be printed and then the printing is carried out.

The ink droplet which was not used to carry out the printing is recovered by the gutter 114 and the recovered ink droplet is supplied again to the nozzle 111 by the pump 115. Since this printing process has been known already, a detailed explanation thereof will be omitted.

In this case, only the printing head 110 is positioned at the printing position where the printing head 110 is positioned oppositely against the printing object matter 700 to be printed (the product to be transported) on the conveyor 600 but a main body of the printing unit 100 is positioned at a vicinity of the line (the conveyor 600) or at a position where the main body of the printing unit 100 is not a hindrance to other equipment machines and further the main body of the printing unit 100 is arranged by assembling it to other equipment machines.

The input unit 200 is arranged at a voluntary position by separating from the line. As a result, it can be set to enable to carry out an easy operation for the input unit 200.

In the above case, in Fig. 2, as shown using a reference numeral 800, a radio line communication means is utilized, the position of the input unit 200 can be set at any position where the communication data from the input unit 200 can surely received in the printing unit 100. As a result, a freedom degree of the installation position of the side of the input unit 200 can be made large and then a layout establishment of a manufacture line can be carried out easily.

As to the alternation of the printing content and the character height etc., in accordance with the data which is inputted from the panel input and display apparatus 206 or the data which is inputted from the host CPU 500 through the host interface 202, MPU 101 carries out to alter the printing content in the battery backup RAM 104.

Further, the interface 108 at the side of the printing unit 100 and the interface 210 of the side of the input unit 200 are altered in accordance with the form of the communication means between the printing unit 100 and the input unit 200, the communication controls of both MPU 101 and MPU 201 differ in accordance with the forms of the communication means.

Herein, as the form of the communication means the radio line communication and the wire line communication and as the radio line communication various communication means such as an electric wave, a supersonic wave, a light can be employed.

As stated in above, in a case the printing unit 100 and the input unit 200 are constituted separately, from the input unit 200 the printing data is transmitted, at the side of the printing unit 100 in accordance with the received data the printing is carried out, however in this case it is necessary to change over the printing information. The change-over data of the most important printing information is the printing content.

Here, the change-over of the printing content will be explained. As to the change-over of the printing contents, for example, there are cases which are comprised of a case A-(1) "a case where the data is inputted from the panel input and display apparatus 206", a case of A-(2) "a case where data is transmitted from the host CPU 500", a case of A-(3) "a case where after the printing finish using a count-up function the printing content is renewed automatically", a case of A-(4) "a case where using the count function the printing content is renewed automatically by the trigger signal from the outside", a case of A-(5) "a case where using the calender function the data of the calender is renewed", and a case of A-(6) "a case where using the data store function (the various data are stored in total and according to the demand the data is called out in total and the data is renewed automatically), the data is renewed automatically", etc..

As to the cases of the above case A-(1) and the above case A-(2), when the data is inputted from the panel input and display apparatus 206 and the data is transmitted from the host CPU 500, it presents that the new data is inputted and in response to the inputted data then the printing content in the printing unit 100 is changed over.

As to the case of the above case A-(3), the printing number (the number of the printing object matter to be printed) is counted, when the printing of a predetermined printing counter number is finished and the printing number is counted up, it is renewed automatically the new printing content, in the printing unit 100, using these renewal printing contents then the printing is carried out.

As to the case of the above case A-(4), every the trigger signal is inputted from a side of the outside portion control apparatus 400 each, in the input unit 200 the trigger signal is counted up and at every time the data is transmitted to the printing unit 100 and then the printing content is renewed.

As to of the case of the above case A-(5), in accordance with the time condition of the date and time which has set in the calender etc., the data is renewed automatically, and then the data about the manufacturing date and the manufacturing time etc. are renewed automatically and then the printing is carried out.

As to the case of the above case A-(6), the various data are stored in total and according to the demand, the data is called out and then the call-out data is renewed automatically.

The above stated change-over timing for changing over of the printing content will be explained. The change-over timing, for example, there are cases which are comprised of a case B-(1) "a case where at a time when the new data is inputted from the input unit 200, the data is transmitted to the printing unit 100 and then the data is renewed (the renewal of the data can be carried out after the printing finish or after the printing interruption. A manner which is recommended in such a system can be selected. Hereinafter, this manner will be selected in a similar way)", a case B-(2) "a case where at a time the new data is inputted to the input unit 200 from the host CPU 34, the data is transmitted to the printing unit 100 and then the data is renewed", a case B-(3) "a case where as to the printing finish at a time when the printing unit 100 is informed to the input unit 200 through the communication line 300, the printing content is counted up by the input unit 100 and the data is transmitted to the printing unit 100 and then the data is renewed", a case B-(4) "a case where the indication of the count-up is entered from the outside portion control apparatus 400, the printing content is counted up by the input unit 200 and the data is transmitted to the printing unit 100 and then the data is renewed", a case B-(5) "a case where the interruption is generated from the calender interruption generation circuit 208 of the input unit 200 and when the interruption is generated and the printing content is altered, the printing content is counted up by the input unit 200 and the data is transmitted to the printing unit 100 and then the data is renewed", and B-(6) "a case where in the input unit 200 using the data store function when the renewal of the data is indicated, other data including the printing content is renewed by the input unit 200, the data is transmitted to the printing unit 100 and then the data is renewed".

With respect to the above stated change-over of the printing content and the change-over timing for changing over the printing content, each of the cases from A-(1) to A-(6) corresponds to each of the cases from B-(1) to B-(6) in order.

Further, in this carrying-out embodiment of the printing apparatus according to the present invention, the continuous system ink jet printing apparatus is explained, however a drop and on-demand system ink jet printing apparatus will be employed similarly.

Further, the present invention is not limited to the printing apparatus in which this kind of the ink jet system printing head is used, but a dot matrix type printing apparatus having a thermal head, a dot impact head, and a bubble jet head etc., can be applied entirely.

## Claims

1. A printing apparatus having a printing head (110), the apparatus being adapted for printing on a printing object matter (700), said printing object matter (700) being transported on a conveyor belt (600) and being a product, said printing apparatus comprising:
an input unit (200, 206, 205) having input means (202) in which the printing information is inputted, a first memory means (203) for storing said inputted printing information which is inputted by said input means, a first communication means (210) for transmitting said stored printing information which is stored in said first memory means, and a first control means (201) for controlling a control of each of above stated these means; and
a printing unit (100) comprising
(a) a second communication means (108) for receiving said transmitted printing information through said first communication means,
(b) said printing head (110), and
(c) a second control means (101, 105) for controlling a control of said second communication means and for carrying out the printing by operating said printing head in accordance with said received printing information which is received by said second communication means,
wherein
said printing head (110) is positioned at a side of the conveyor (600) by which said product (700) to be printed is transported, and the printing is carried out by moving relatively said printing head (110) against said product (700) on said conveyor (600), and
wherein the printing apparatus is arranged to change-over a printing content to renewed printing content in all of the following cases
B-(1) when new data is transmitted from said input unit (200, 206, 205) to said printing unit (100),
B-(2) when said printing unit (100) receives new data transmitted from a host computer (500),
B-(3) when a printing completion is notified to said input unit (200) from said printing unit (100) and a count-up is effected in said input unit,
B-(4) when a counting-up is effected in said input unit based on an externally supplied trigger signal inputted from an outside portion control apparatus (400),
B-(5) when generation of an interruption from a calender interruption generation circuit (208) occurs and a count-up is effected in said input unit,
B-(6) when, using a data store function in said input unit, a renewal of printing content data by data read out from stored data is demanded.

2. A printing apparatus according to claim 1, wherein the printing apparatus further comprises a second memory means for storing said printing information which is transmitted from said input unit to said printing unit.

3. A printing apparatus according to claim 1, wherein said input unit and said printing unit are constituted separately.

4. A printing apparatus according to claim 1, wherein said printing head is a dot matrix type printing head.

5. A printing apparatus according to claim 4, wherein said printing head of said dot matrix type printing head is a system selected from an ink jet system, a thermal system, and a dot impact system.

6. A printing apparatus according to claim 4, wherein said ink jet system printing head has a means for preparing an ink droplet by injecting said ink droplet from a nozzle (111), a means for generating a signal in accordance with said printing information, a means (112) for charging said ink droplet, and a means (113) for deflecting said ink droplet, and
said printing head forms a dot matrix which has a first deflection direction component and a second deflection direction component substantial perpendicular to said first deflection direction component.

7. A printing apparatus according to claim 1, wherein each of said first communication means and said second communication means is one selected from an electric wave communication, a supersonic communication, a light communication and a wire line communication.

8. A printing apparatus according to claim 1, wherein each of said first control means and said second control means is a microprocessor unit in which a predetermined operation is carried out according to a preset program.

## Patentansprüche

1. Druckvorrichtung mit einem Druckkopf (110) zum Bedrucken eines Druckgegenstands (700), der auf einem Transportband (600) transportiert wird und ein Produkt ist, und weiter mit einer Eingabeeinheit (200, 206, 205) mit einer Eingabeeinrichtung (202), in die die Druckinformation eingegeben wird, einer ersten Speichereinrichtung (203), um die eingegebene Druckinformation zu speichern, die von der Eingabeeinrichtung eingegeben wurde, einer ersten Kommunikationseinrichtung (210), um die gespeicherte Druckinformation zu übertragen, die in der ersten Speichereinrichtung gespeichert ist, und einer ersten Steuereinrichtung (201), um die Steuerung jeder der obigen Einrichtungen zu steuern, und einer Druckeinheit (100), die umfasst
(a) eine zweite Kommunikationseinrichtung (108) zum Empfangen der übertragenen Druckdaten von der ersten Kommunikationseinrichtung,
(b) den Druckkopf (110), und
(c) eine zweiten Steuereinrichtung (101, 105), um eine Steuerung der zweiten Kommunikationseinrichtung zu steuern und um den Druck auszuführen, indem der Druckkopf entsprechend der von der zweiten Kommunikationseinrichtung empfangenen Druckinformation betätigt wird,
bei der der Druckkopf (110) an einer Seite des Transportbandes (600) angebracht ist, mit dem das zu bedruckende Produkt (700) transportiert wird, und der Druck ausgeführt wird, indem der Druckkopf (110) relativ gegen das Produkt (700) auf dem Transportband (600) bewegt wird, und wobei die Druckvorrichtung dazu ausgelegt ist, dass Druckinhalt in erneuerten Druckinhalt in jedem der folgenden Fälle geändert wird:
B-(1) wenn neue Daten von der Eingabeeinheit (200, 206, 205) an die Druckeinheit (100) übertragen werden,
B-(2) wenn die Druckeinheit (100) neue von einem Hostcomputer (500) übertragene Daten empfängt,
B-(3) wenn von der Druckeinheit (100) an die Eingabeeinheit (200) Druckende gemeldet wird und in der Eingabeeinheit ein Hochzählen bewirkt wird,
B-(4) wenn aufgrund eines von einem außerhalb befindlichen Steuergerät (400) eingegebenen extern gelieferten Triggersignals in der Eingabeeinheit ein Hochzählen bewirkt wird,
B-(5) wenn von einer Schaltung zur Erzeugung einer kalendermäßigen Interrupts ein Interrupt erfolgt und in der Eingabeeinheit ein Hochzählen bewirkt wird,
B-(6) wenn unter Benutzung einer Datenspeicherfunktion in der Eingabeeinheit eine Erneuerung der Druckinhaltsdaten durch Daten, die von gespeicherten Daten ausgelesen werden, angefordert wird.

2. Druckvorrichtung nach Anspruch 1, die weiter eine zweite Speichereinrichtung umfasst, um Druckinformation zu speichern, die von der Eingabeeinheit an die Druckeinheit übertragen wird.

3. Druckvorrichtung nach Anspruch 1, bei der die Eingabeeinheit und die Druckeinheit getrennt ausgebildet sind.

4. Druckvorrichtung nach Anspruch 1, bei der der Druckkopf ein Druckkopf vom Punkt-Matrix-Typ ist.

5. Druckvorrichtung nach Anspruch 4, bei der der Druckkopf vom Punkt-Matrix-Typ ein Tintenstrahlsystem oder ein thermisches System oder ein Nadeldrucksystem ist.

6. Druckvorrichtung nach Anspruch 4, bei der der Tintenstrahldruckkopf eine Einrichtung zur Erzeugung eines Tintentropfens durch Einspritzung des Tintentropfens von einer Düse (111) aufweist, eine Einrichtung zur Erzeugung eines Signals in Übereinstimmung mit der Druckinformation, eine Einrichtung (112) zum Aufladen des Tintentropfens und eine Einrichtung (113) zur Ablenkung des Tintentropfens, und
bei der der Druckkopf eine Punkt-Matrix bildet, die eine Komponente in einer ersten Ablenkungsrichtung hat und eine Komponente in einer zweiten Ablenkungsrichtung hat, die im Wesentlichen senkrecht zu der Komponente in der ersten Ablenkungsrichtung ist.

7. Druckvorrichtung nach Anspruch 1, bei der sowohl die erste Kommunikationseinrichtung als auch die zweite Kommunikationseinrichtung Kommunikation mit elektrischen Wellen oder Ultraschallkommunikation oder Kommunikation mit Licht oder Kommunikation über Drahtleitungen durchführen.

8. Eine Druckvorrichtung nach Anspruch 1, bei der sowohl die erste Steuereinrichtung als auch die zweite Steuereinrichtung eine Mikroprozessoreinheit ist, in der nach einem voreingestellten Programm eine vorbestimmte Operation ausgeführt wird.

## Revendications

1. Un appareil d'impression doté d'une tête d'impression (110), adapté pour l'impression sur un support d'impression (700), ledit support d'impression (700) correspondant à un produit et étant transporté sur un tapis roulant (600), ledit appareil d'impression comprenant:
un périphérique d'entrée (200, 206, 205) équipé d'un moyen d'entrée (202) par lequel les informations d'impression sont entrées, d'un premier moyen de mémoire (203) permettant le stockage de ladite information d'impression d'entrée laquelle est entrée par ledit moyen d'entrée, un premier moyen de communication (210) permettant la transmission de ladite information d'impression stockée laquelle est stockée dans ledit premier moyen de mémoire et un premier moyen de commande (201) pour commander une commande de chacun des moyens cités ci-dessus; et
une unité d'impression (100) comprenant (a) un deuxième moyen de communication (108) permettant de recevoir ladite information d'impression transmise via ledit premier moyen de communication, (b) ladite tête d'impression (110) et (c) un deuxième moyen de commande (101, 105) pour commander une commande dudit deuxième moyen de communication et pour exécuter l'impression par l'intervention de ladite tête d'impression, en accord avec ladite information d'impression reçue laquelle est reçue par ledit deuxième moyen d'information,
dans lequel
ladite tête d'impression (110) est positionnée d'un côté du tapis roulant (600) au moyen duquel ledit produit (700) à imprimer est transporté, et l'impression est réalisée par le déplacement de ladite tête d'impression (110) parallèlement audit produit (700) sur ledit tapis roulant (600),
et
dans lequel l'appareil d'impression est agencé pour remplacer un contenu à imprimer par un autre contenu à imprimer dans tous les cas suivants:
B-(1): lorsque de nouvelles données sont transmises à partir dudit périphérique d'entrée (200, 206, 205) à ladite unité d'impression (100),
B-(2): lorsque ladite unité d'impression (100) reçoit de nouvelles données transmises à partir d'un ordinateur hôte (500),
B-(3): lorsque la fin de la session d'impression est signalée audit périphérique d'entrée (200) à partir de ladite unité d'impression (100) et qu'un comptage progressif est réalisé au niveau dudit périphérique d'entrée,
B-(4): lorsqu'un comptage est réalisé dans ledit périphérique d'entrée grâce à un signal de déclenchement envoyé depuis l'extérieur par un appareil de commande externe (400),
B-(5): lorsqu'une interruption est provoquée à partir d'un circuit de génération d'interruption calendaire (208) et qu'un comptage progressif est réalisé dans ledit périphérique d'entrée,
B-(6): lorsque, grâce à une fonction de stockage de données dudit périphérique d'entrée, un renouvellement des données du contenu à imprimer par extraction des données stockées est demandé.

2. Un appareil d'impression selon la revendication 1, dans lequel l'appareil d'impression comprend également un second moyen de mémoire pour le stockage desdites informations d'impression lesquelles sont transmises à partir du périphérique d'entrée à ladite unité d'impression.

3. Un appareil d'impression selon la revendication 1, dans lequel ledit périphérique d'entrée et ladite unité d'impression sont indépendants.

4. Un appareil d'impression selon la revendication 1, dans lequel ladite tête d'impression est une tête d'impression de type matrice de points.

5. Un appareil d'impression selon la revendication 4, dans lequel ladite tête d'impression de ladite tête d'impression de type matrice de points fonctionne selon un système à jet d'encre, un système thermique ou un système à impact matriciel.

6. Un appareil d'impression selon la revendication 4, dans lequel ledit système à jet d'encre de la tête d'impression comporte un moyen lui permettant de préparer une gouttelette d'encre en injectant ladite gouttelette d'encre à l'aide d'une buse (111), un moyen pour émettre un signal correspondant aux dites informations d'impression, un moyen (112) pour charger ladite gouttelette d'encre et un moyen (113) pour dévier ladite gouttelette d'encre, et ladite tête d'impression forme une matrice de points, qui a un premier composant de déflexion et un deuxième composant de déflexion substantiellement perpendiculaire audit premier composant de déflexion.

7. Un appareil d'impression selon la revendication 1, dans lequel chacun dudit premier moyen de communication et dudit deuxième moyen de communication est un moyen choisi parmi une communication par ondes électriques, une communication supersonique, une communication par signaux lumineux et une communication par câble.

8. Un appareil d'impression selon la revendication 1, dans lequel chacun dudit premier moyen de commande et dudit deuxième moyen de commande est constitué d'un microprocesseur dans lequel une opération prédéterminée est effectuée en fonction d'un programme préétabli.
